# EUROPÄISCHE PATENTSCHRIFT

(11) **EP 2 996 925 B1**
(45) Veröffentlichungstag und Bekanntmachung des Hinweises auf die Patenterteilung: **08.08.2018**
(21) Anmeldenummer: 14719339.5
(22) Anmeldetag: 25.04.2014
(51) Int. Cl.: B60G 13/00, B60G 15/06, B62D 21/11, B62D 27/02, B62D 29/00, B62D 65/12, B62D 25/08

(54) **FEDERSTÜTZE FÜR EIN KRAFTFAHRZEUG**
SPRING SUPPORT FOR A MOTOR VEHICLE
SUPPORT-RESSORT DESTINÉ À UN VÉHICULE AUTOMOBILE

(30) Priorität: 16.05.2013 DE 102013209099
(43) Veröffentlichungstag der Anmeldung: 23.03.2016
(73) Patentinhaber: Bayerische Motoren Werke Aktiengesellschaft, 80809 München (DE)
(72) Erfinder: MÜHLHAUSEN, Mark, 85457 Wörth (DE); RITSCHEL, Thomas, 80687 München (DE); GOLDSCHMIDT, Sebastian, 80939 München (DE)
(86) Internationale Anmeldenummer: PCT/EP2014/058510
(87) Internationale Veröffentlichungsnummer: WO 2014/183976

(56) Entgegenhaltungen:
- EP-A1- 1 834 862
- DE-A1- 19 630 647
- JP-A- H01 269 678
- JP-A- 2010 247 599

## Beschreibung

Die Erfindung betrifft eine Federstütze für ein Kraftfahrzeug, seine Verwendung sowie die Herstellung einer Federstütze für ein Kraftfahrzeug.

Zur Anbindung einer Feder-Dämpfeinheit einer Vorderachse sind Karosseriestrukturen bekannt, bei denen aus mehreren Stahlblechen eine Federstütze hergestellt wird, und ein Federbeintopf aus Stahl mit mehreren Schalenbauteilen aus Stahl, die Verbindungen zu einem Motorträger und einem Stützträger aufweisen, verschweißt ist. Aufgrund des hohen Eigengewichts des Stahls wurden in jüngerer Vergangenheit Karosseriestrukturen aus leichteren Materialien bereitgestellt. So sind z.B. Federstützen bekannt, die in einer Druckgusskonstruktion aus Leichtmetall hergestellt werden. Die hier verwendeten Leichtmetalle führen jedoch in Kombination mit einer Karosseriestruktur aus noch leichterem Kohlenstofffaserverbundkunststoff (CFK) zu Kontaktkorrosion und Problemen aufgrund der unterschiedlichen Wärmeausdehnungskoeffizienten der Leichtmetalle im Vergleich mit CFK und Stahl.

Ferner zeigt die EP 1 834 862 A1 ein Kraftfahrzeug mit einem Federbeindom, der über Federbeindomstreben an einem Motorträger und einem Stützträger abgestützt ist.

Darüber hinaus betrifft die DE 196 30 647 A1 eine Federbeinaufnahme, die durch ein Innenhochdruckumformverfahren als Hohlkörper ausgebildet ist und mit zwei Längsträgern einen räumlichen Trägerverbund bildet.

Ebenso zeigt die JP 2010247599 A eine Federbeinaufnahme die mit benachbarten Längsträgern verbunden ist.

Ausgehend von diesem Stand der Technik ist es daher Aufgabe der vorliegenden Erfindung, eine Federstütze für ein Kraftfahrzeug zu schaffen, welche zum einen den hohen mechanischen Anforderungen einer Federstütze gerecht wird, zum anderen Kontaktkorrosion und Probleme aufgrund unterschiedlicher Wärmeausdehnungskoeffizienten vermeidet, aber trotzdem nur ein geringes Gewicht aufweist. Ferner ist es Aufgabe der Erfindung ein einfaches und kostengünstiges Verfahren zur Herstellung einer stabilen, dennoch sehr leichten, korrosionsgeschützten und vor Problemen, basierend auf unterschiedlichen Wärmeausdehnungskoeffizienten, geschützten Federstütze bereitzustellen.

Erfindungsgemäß wird diese Aufgabe bei einer Federstütze für ein Kraftfahrzeug dadurch gelöst, dass ein Federbeintopf aus einem metallischen Werkstoff und drei Schalenbauteile aus einem Faserverbundwerkstoff, insbesondere einem faserverstärkten Kunststoff, vorgesehen sind, wobei der Federbeintopf derart in die Schalenbauteile eingebunden ist,
- dass ein erstes Schalenbauteil von einer Außenseite eines Motorträgers zu einer Unterseite eines Stützträgers einen Bogen spannt und der Federbeintopf mit seinem Rand von unten an dem ersten Schalenbauteil befestigt ist,
- ein zweites Schalenbauteil eine Oberseite des Stützträgers, eine Oberseite des ersten Schalenbauteils und eine äußere Oberseite des Federbeintopfes miteinander verbindet und
- ein drittes Schalenbauteil an einer Innenseite des Motorträgers und einer Oberseite eines Motorträgers sowie an einer Innenseite des ersten Schalenbauteils und einer inneren Oberseite des Federbeintopfes befestigt ist.

Durch die Ausführung des Federbeintopfes aus einem metallischen Werkstoff kann dieser stabil mit einem Stützlager einer Federung, beispielsweise einer Vorderachsfederung, verschraubt werden. Dadurch, dass der Federbeintopf in drei Schalenbauteile aus einem Faserverbundmaterial, auf spezifische Weise eingebunden ist, und die Faserverbundmaterialien einen sicheren Verbund mit den umliegenden Kraftfahrzeugteilen, beispielsweise einem Motorträger und einem Stützträger, bereitstellen, die ebenfalls vorzugsweise in Faserverbundbauweise (z.B. CFK) ausgeführt sind, kann effektiv einer Kontaktkorrosion sowie Problemen aufgrund unterschiedlicher Wärmeausdehnungskoeffizienten, vorgebeugt werden. Zudem wird durch Verwendung von Schalenbauteilen in Faserverbundbauweise, bei gleichbleibend guten mechanischen Eigenschaften, effektiv Gewicht reduziert. Durch die spezifische Anordnung und Geometrie der einzelnen Bauteile ergibt sich in Druckrichtung für den Federbeintopf eine zweischnittige Einbettung in die umliegenden Schalenbauteile, so dass deren Verbindung überwiegend auf Druck belastet wird. Die erfindungsgemäße Verbundkonstruktion aus metallischem Werkstoff und Faserverbundwerkstoffen zeichnet sich somit durch eine ausgezeichnete Stabilität bei hoher Gewichtseinsparung aus.

Die Unteransprüche beinhalten vorteilhafte Weiterbildungen und Ausgestaltungen der Erfindung.

Gemäß einer vorteilhaften Weiterbildung ist der die Schalenbauteile bildende Faserverbundwerkstoff ein Kohlenstofffaserverbundwerkstoff, insbesondere ein Kohlefaser verstärkter Kunststoff. Kohlenstofffaserverbundwerkstoffe zeichnen sich durch ein sehr geringes Eigengewicht bei sehr guten mechanischen Eigenschaften aus.

Für eine dauerhafte Verbindung der Schalenbauteile und des Federbeintopfes ist weiter vorteilhaft, dass der Federbeintopf und die Schalenbauteile mittels einer Klebung miteinander verbunden sind. Dies ist ferner der Korrosionsstabilität zuträglich. Durch die vorzugsweise flächige Verklebung entlang der jeweiligen Verbindungsflächen, wird eine ausreichend druckstabile Verbindung bereitgestellt, die selbst hohen mechanischen Belastungen, wie sie auf eine Vorderachse eines Kraftfahrzeugs einwirken, stand hält.

Eine weitere vorteilhafte Weiterbildung sieht vor, dass der Federbeintopf, das erste Schalenbauteil und das zweite Schalenbauteil so miteinander verbunden sind, dass sich zwischen einer Außenseite des Federbeintopfs, einer Innenseite des Stützträgers, dem von unten an den Stützträger gefügten ersten Schalenbauteil und dem mit der Oberseite des Stützträgers verbundenen zweiten Schalenbauteil ein im Wesentlichen rechteckiges Profil ausbildet Dies ist für eine gleichmäßige Kraftübertragung von Vorteil, so dass die erfindungsgemäße Federstütze selbst gegenüber hohen mechanischen Einwirkungen resistent ist.

Um die Stabilität der erfindungsgemäßen Federstütze weiter zu erhöhen, bilden das erste Schalenbauteil und das dritte Schalenbauteil zusammen ein im Wesentlichen vertikales Profil, das an seinem oberen Ende vom Federbeintopf und an seinem unteren Ende vom Motorträger geschlossen wird.

Ebenfalls erfindungsgemäß wird die Verwendung der vorstehend beschriebenen Federstütze für ein Kraftfahrzeug zur Anbindung einer Feder-Dämpfereinheit einer Vorderachse, vorzugsweise einer Mc Pherson Vorderachse, beschrieben. Aufgrund der spezifischen Geometrie einer Mc Pherson Vorderachse ist die erfindungsgemäße Federstütze hierfür besonders gut geeignet.

Weiter erfindungsgemäß wird ein Verfahren zur Herstellung einer Federstütze für ein Kraftfahrzeug beschrieben, das durch die Schritte
- Bereitstellen eines Federbeintopfes aus einem metallischen Werkstoff und dreier Schalenbauteile aus einem Faserverbundwerkstoff, insbesondere einem faserverstärkten Kunststoff,
- Befestigen eines ersten Schalenbauteils an einer Außenseite eines Motorträgers und an einer Unterseite eines Stützträgers, so dass das erste Schalenbauteil einen Bogen spannt,
- Befestigen eines Randes des Federbeintopfes von unten an dem ersten Schalenbauteil,
- Verbinden eines zweiten Schalenbauteils mit einer Oberseite eines Stützträgers, einer Oberseite des ersten Schalenbauteils und einer äußeren Oberseite des Federbeintopfes und
- Befestigen eines dritten Schalenbauteils an einer Innenseite eines Motorträgers und einer Oberseite eines Motorträgers sowie an einer Innenseite des ersten Schalenbauteils und einer inneren Oberseite des Federbeintopfes
gekennzeichnet ist. Durch das erfindungsgemäße Verfahren, insbesondere durch Kombination spezifischer Materialien für einen Federbeintopf und Schalenbauteile zur Befestigung an entsprechend vorgesehenen Kraftfahrzeugteilen mit einer spezifischen Geometrie, Anordnung und Befestigungsweise der Schalenbauteile, wird auf einfach und kostengünstige Weise ohne hohen technischen Aufwand eine korrosionsresistente, von Problemen mit unterschiedlichen Wärmeausdehnungskoeffizienten geschützte, stabile Federstütze für ein Kraftfahrzeug bereitgestellt, die sich ebenfalls durch eine deutlich gewichtsreduzierte Bauweise auszeichnet.

Die für die erfindungsgemäße Federstütze für ein Kraftfahrzeug beschriebenen vorteilhaften Effekte, Vorteile und Ausgestaltungen finden auch Anwendung auf das erfindungsgemäße Verfahren zur Herstellung einer Federstütze für ein Kraftfahrzeug. Es sei ferner ausgeführt, dass sich das erfindungsgemäße Verfahren auch zur Herstellung der oben beschriebenen Federstütze eignet.

Um einen dauerhaften Verbund der bereitgestellten Bauteile der Federstütze zu gewähren, und um Kontaktkorrosion weiter zu vermeiden, werden der Federbeintopf und die Schalenbauteile miteinander verklebt.

Um eine gleichmäßige Kraftübertragung bei Betrieb der Federstütze bereitzustellen, so dass die Federstütze selbst gegenüber hohen mechanischen Einwirkungen resistent ist, ist das erfindungsgemäße Verfahren ferner dadurch gekennzeichnet, dass der Federbeintopf an das erste Schalenbauteil gefügt wird, welches von unten an die Unterseite des Stützträgers gefügt ist und das zweite Schalenbauteil von oben auf die Oberseite des Stützträgers und den Federbeintopf gefügt wird, so dass sich zwischen einer Außenseite des Federbeintopfs, einer Innenseite des Stützträgers, dem von unten an den Stützträger gefügten ersten Schalenbauteil und dem mit der Oberseite des Stützträgers verbundenen zweiten Schalenbauteil ein im Wesentlichen rechteckiges Profil bildet.

Durch die weitere vorteilhafte Ausgestaltung dass das dritte Schalenbauteil zusammen mit dem ersten Schalenbauteil ein im Wesentlichen vertikales Profil bilden, das an seinem unteren Ende vom Motorträger und an seinem oberen Ende vom Federbeintopf geschlossen wird, kann die Stabilität der Federstütze weitere erhöht werden.

Infolge der Ausgestaltungen und Weiterbildungen der erfindungsgemäßen Federstütze für ein Kraftfahrzeug sowie des erfindungsgemäßen Verfahrens zur Herstellung einer Federstütze für ein Kraftfahrzeug, ergeben sich insbesondere folgende Vorteile:
- Die mechanischen Eigenschaften der Federstütze werden durch die erfindungsgemäße Wahl der Materialien in Kombination mit der vorgesehenen Geometrie und Anordnung der Bauteile verbessert.
- Der Verbund zwischen den Schalenbauteilen und dem Federbeintopf ist stabilisiert.
- Das Gewicht der erfindungsgemäßen Federstütze ist bei gleichen funktionalen Eigenschaften geringer als bei in herkömmlicher Bauweise hergestellten Federstützen.
- Die Federstütze ist effektiv vor Kontaktkorrosion geschützt.
- Probleme aufgrund unterschiedlicher Wärmeausdehnungskoeffizienten werden vermieden.
- Das Verfahren ist einfach ohne hohen technischen Aufwand und damit kostengünstig umsetzbar.

Weitere Einzelheiten, Merkmale und Vorteile der Erfindung ergeben sich aus der nachfolgenden Beschreibung und den Figuren. Es zeigen:
- Figur 1: einen Querschnitt durch eine Federstütze gemäß einer ersten Ausführungsform der Erfindung,
- Figur 2: eine perspektivische Ansicht der Federstütze gemäß der ersten Ausführungsform der Erfindung aus Figur 1 von schräg vorne und
- Figur 3: eine perspektivische Ansicht der Federstütze gemäß der ersten Ausführungsform der Erfindung aus Figur 1 von schräg unten

In den Figuren sind nur die hier interessierenden Teile der Baugruppe für eine Fahrzeugkarosserie dargestellt, alle übrigen Elemente sind der Übersichtlichkeit halber weggelassen. Ferner stehen gleiche Bezugszeichen für gleiche Bauteile.

In den Figuren wird die erfindungsgemäße Baugruppe am Beispiel einer Federstütze für eine Vorderachse eines Kraftfahrzeugs erläutert. Die erfindungsgemäße Federstütze kann jedoch auch anderweitig Anwendung in einem Kraftfahrzeug finden.

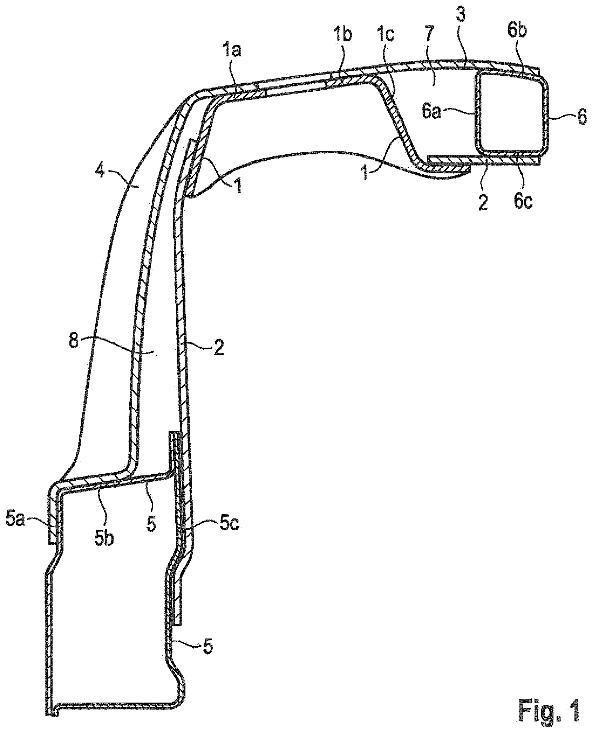

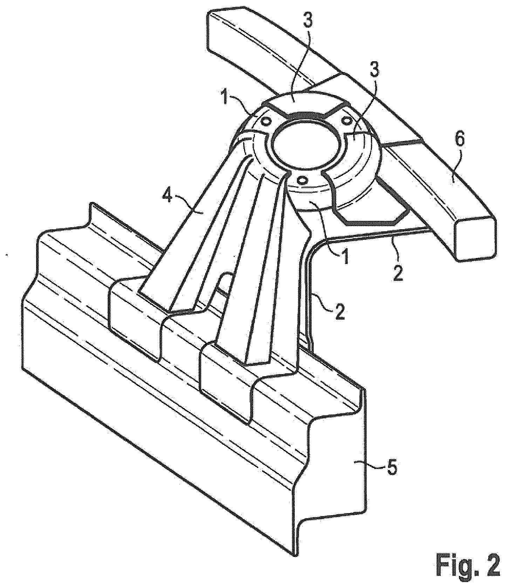

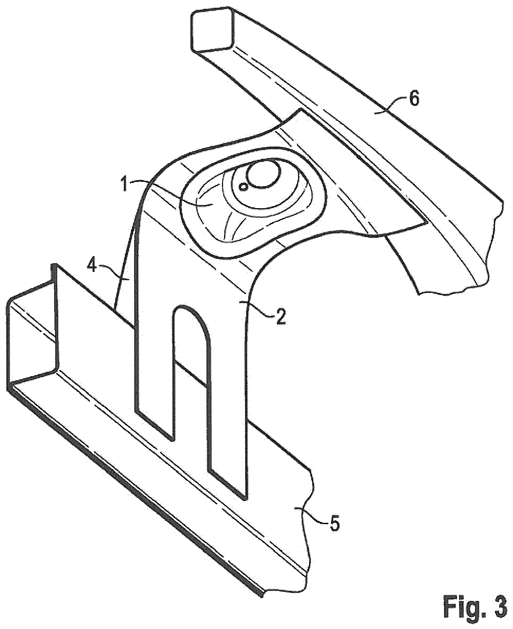

Figur 1 zeigt einen Querschnitt durch eine Federstütze gemäß einer ersten Ausführungsform der Erfindung. Figuren 2 und 3 zeigen perspektivische Ansichten der Federstütze aus Figur 1 von schräg vorne bzw. von schräg unten. Gezeigt sind ein Federbeintopf 1, ein Stützträger 6, ein erstes Schalenbauteil 2, ein zweites Schalenbauteil 3, ein drittes Schalenbauteil 4 und ein Motorträger 5.

Der Federbeintopf 1 ist aus einem metallischen Werkstoff, beispielsweise aus Stahl oder Aluminium gebildet. Die drei Schalenbauteile 2, 3, 4 bestehen aus einem Faserverbundwerkstoff, vorzugsweise einem Kohlenstofffaserverbundwerkstoff.

Wie im Detail in Figur 1 gezeigt, ist der Federbeintopf 1 derart in die Schalenbauteile 2, 3, 4 eingebunden, dass das erste Schalenbauteil 2 von der Außenseite eines Motorträgers 5c zur Unterseite eines Stützträgers 6c einen Bogen spannt und der Federbeintopf 1 mit seinem Rand 1d von unten an dem ersten Schalenbauteil 2 befestigt ist. Das zweite Schalenbauteil 3 verbindet die Oberseite des Stützträgers 6b, die Oberseite des ersten Schalenbauteils 2 und die äußere Oberseite des Federbeintopfes 1b miteinander. Das dritte Schalenbauteil 4 ist an der Innenseite des Motorträgers 5a und der Oberseite eines Motorträgers 5b sowie an der Innenseite des ersten Schalenbauteils und der inneren Oberseite des Federbeintopfes 1a befestigt.

Durch die spezifische Auswahl an Materialien und geometrischen Formen der die Federstütze bildenden Einzelbauteile und auch deren Anordnung wird eine Federstütze mit sehr guten mechanischen Eigenschaften, hoher Korrosionsstabilität und geringem Gewicht bereitgestellt.

Durch Verbinden des Federbeintopfes 1 und der Schalenbauteile 2, 3, 4 mittels einer Klebung können die Stabilität der Federstütze und ihre Korrosionsstabilität optimiert werden.

Figur 1 zeigt ferner, dass der Federbeintopf 1, das erste Schalenbauteil 2 und das zweite Schalenbauteil 3 so miteinander verbunden sind, dass sich zwischen der Außenseite des Federbeintopfes 1c, der Innenseite des Stützträgers 6a, dem von unten an den Stützträger 6 gefügten ersten Schalenbauteil 2 und dem mit der Oberseite des Stützträgers 6b verbundenen zweiten Schalenbauteil 3 ein im Wesentlichen rechteckiges Profil 7 ausbildet. Dies unterstützt eine gleichmäßige Kraftübertragung auf die Federstütze, so dass diese selbst gegenüber hohen mechanischen Einwirkungen resistent ist.

Ferner bilden das erste Schalenbauteil 2 und das dritte Schalenbauteil 4 zusammen ein im Wesentlichen vertikales Profil 8, das an seinem oberen Ende vom Federbeintopf 1 und an seinem unteren Ende vom Motorträger 5 geschlossen wird. Dies trägt ebenfalls zur Erhöhung der Stabilität der Federstütze bei.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Federbeintopf
- 1a: äußere Oberseite des Federbeintopfes
- 1b: innere Oberseite des Federbeintopfes
- 1c: Innenseite des Federbeintopfes
- 2: erstes Schalenbauteil
- 3: zweites Schalenbauteil
- 4: drittes Schalenbauteil
- 5: Motorträger
- 5a: Innenseite des Motorträgers
- 5b: Oberseite des Motorträgers
- 5c: Außenseite des Motorträgers
- 6: Stützträger
- 6a: Innenseite des Stützträgers
- 6b: Oberseite des Stützträgers
- 6c: Unterseite des Stützträgers
- 7: rechteckiges Profil
- 8: vertikales Profil

## Patentansprüche

1. Federstütze für ein Kraftfahrzeug, **gekennzeichnet durch** einen Federbeintopf (1) aus einem metallischen Werkstoff und drei Schalenbauteile (2, 3, 4) aus einem Faserverbundwerkstoff, wobei der Federbeintopf (1) derart in die Schalenbauteile (2, 3, 4) eingebunden ist,
- dass ein erstes Schalenbauteil (2) von einer Außenseite eines Motorträgers (5c) zu einer Unterseite eines Stützträgers (6c) einen Bogen spannt und der Federbeintopf (1) mit seinem Rand (1d) von unten an dem ersten Schalenbauteil (2) befestigt ist,
- ein zweites Schalenbauteil (3) eine Oberseite des Stützträgers (6b), eine Oberseite des ersten Schalenbauteils (2) und eine äußere Oberseite des Federbeintopfes (1b) miteinander verbindet und
- ein drittes Schalenbauteil (4) an einer Innenseite des Motorträgers (5a) und einer Oberseite eines Motorträgers (5b) sowie an einer Innenseite des ersten Schalenbauteils (2) und einer inneren Oberseite des Federbeintopfes (1a) befestigt ist.

2. Federstütze für ein Kraftfahrzeug nach Anspruch 1, **dadurch gekennzeichnet, dass** der Faserverbundwerkstoff ein Kohlenstofffaserverbundwerkstoff ist.

3. Federstütze für ein Kraftfahrzeug nach Anspruch 1 oder 2, **dadurch gekennzeichnet, dass** der Federbeintopf (1) und die Schalenbauteile (2, 3, 4) mittels einer Klebung miteinander verbunden sind.

4. Federstütze für ein Kraftfahrzeug nach einem der vorhergehenden Ansprüche, **dadurch gekennzeichnet, dass** der Federbeintopf (1), das erste Schalenbauteil (2) und das zweite Schalenbauteil (3) so miteinander verbunden sind, dass sich zwischen einer Außenseite des Federbeintopfs (1c), einer Innenseite des Stützträgers (6a), dem von unten an den Stützträger (6) gefügten ersten Schalenbauteil (2) und dem mit der Oberseite des Stützträgers (6b) verbundenen zweiten Schalenbauteil (3) ein im Wesentlichen rechteckiges Profil (7) ausbildet.

5. Federstütze für ein Kraftfahrzeug nach einem der vorhergehenden Ansprüche, **dadurch gekennzeichnet, dass** das erste Schalenbauteil (2) und das dritte Schalenbauteil (4) zusammen ein im Wesentlichen vertikales Profil (8) bilden, das an seinem oberen Ende vom Federbeintopf (1) und an seinem unteren Ende vom Motorträger (6) geschlossen wird.

6. Verwendung der Federstütze für ein Kraftfahrzeug nach einem der vorhergehenden Ansprüche zur Anbindung einer Feder-Dämpfereinheit einer Vorderachse, vorzugsweise einer Mc Pherson Vorderachse.

7. Verfahren zur Herstellung einer Federstütze für ein Kraftfahrzeug **gekennzeichnet durch** die Schritte:
- Bereitstellen eines Federbeintopfes (1) aus einem metallischen Werkstoff und dreier Schalenbauteile (2, 3, 4) aus einem Faserverbundwerkstoff,
- Befestigen eines ersten Schalenbauteils (2) an einer Außenseite eines Motorträgers (5c) und an einer Unterseite eines Stützträgers (6c), so dass das erste Schalenbauteil (2) einen Bogen spannt,
- Befestigen eines Randes des Federbeintopfes (1d) von unten an dem ersten Schalenbauteil (2),
- Verbinden eines zweiten Schalenbauteils (3) mit einer Oberseite eines Stützträgers (6b), einer Oberseite des ersten Schalenbauteils (2) und einer äußeren Oberseite des Federbeintopfes (1b) und
- Befestigen eines dritten Schalenbauteils (4) an einer Innenseite eines Motorträgers (5a) und einer Oberseite eines Motorträgers (5b) sowie an einer Innenseite des ersten Schalenbauteils (2) und einer inneren Oberseite des Federbeintopfes (1a).

8. Verfahren nach Anspruch 7, **dadurch gekennzeichnet, dass** der Federbeintopf (1) und die Schalenbauteile (2, 3, 4,) miteinander verklebt werden.

9. Verfahren nach Anspruch 7 oder 8, **dadurch gekennzeichnet, dass** der Federbeintopf (1) an das erste Schalenbauteil (2) gefügt wird, welches von unten an die Unterseite des Stützträgers (6c) gefügt ist und das zweite Schalenbauteil (3) von oben auf die Oberseite des Stützträgers (6b) und den Federbeintopf (1) gefügt wird, so dass sich zwischen einer Außenseite des Federbeintopfs (1c), einer Innenseite des Stützträgers (6a), dem von unten an den Stützträger (6) gefügten ersten Schalenbauteil (2) und dem mit der Oberseite des Stützträgers (6b) verbundenen zweiten Schalenbauteil (3) ein im Wesentlichen rechteckiges Profil (7) bildet.

10. Verfahren nach einem der Ansprüche 7 bis 9, **dadurch gekennzeichnet, dass** das dritte Schalenbauteil (4) zusammen mit dem ersten Schalenbauteil (2) ein im Wesentlichen vertikales Profil (8) bilden, das an seinem unteren Ende vom Motorträger (6) und an seinem oberen Ende vom Federbeintopf (1) geschlossen wird.

## Claims

1. A spring strut for a motor vehicle, **characterised by** a suspension strut tower (1) made of a metallic material and three shell components (2, 3, 4) made of a fibre composite material, wherein the suspension strut tower (1) is incorporated in the shell components (2, 3, 4) such
- that a first shell component (2) spans an arc from an outer side of an engine bracket (5c) to an underside of a supporting member (6c) and the suspension strut tower (1) is fastened from below to the first shell component (2) with its edge (1d),
- a second shell component (3) connects together an upper side of the supporting member (6b), an upper side of the first shell component (2) and an outer upper side of the suspension strut tower (1b), and
- a third shell component (4) is fastened to an inner side of the engine bracket (5a) and an upper side of an engine bracket (5b) and also to an inner side of the first shell component (2) and an inner upper side of the suspension strut tower (1a).

2. A spring strut for a motor vehicle according to Claim 1, **characterised in that** the fibre composite material is a carbon-fibre composite material.

3. A spring strut for a motor vehicle according to Claim 1 or Claim 2, **characterised in that** the suspension strut tower (1) and the shell components (2, 3, 4) are connected together by means of an adhesive bond.

4. A spring strut for a motor vehicle according to one of the preceding claims, **characterised in that** the suspension strut tower (1), the first shell component (2) and the second shell component (3) are connected together such that a substantially rectangular profile (7) is formed between an outer side of the suspension strut tower (1c), an inner side of the supporting member (6a), the first shell component (2) which is joined from below to the supporting member (6) and the second shell component (3) which is connected to the upper side of the supporting member (6b).

5. A spring strut for a motor vehicle according to one of the preceding claims, **characterised in that** the first shell component (2) and the third shell component (4) together form a substantially vertical profile (8) which is closed at its upper end by the suspension strut tower (1) and at its lower end by the engine bracket (6).

6. Use of the spring strut for a motor vehicle according to one of the preceding claims for attaching a spring-and-shock absorber unit of a front axle, preferably a MacPherson front axle.

7. A method for producing a spring strut for a motor vehicle, **characterised by** the steps:
- providing a suspension strut tower (1) made of a metallic material and three shell components (2, 3, 4) made of a fibre composite material,
- fastening a first shell component (2) to an outer side of an engine bracket (5c) and to an underside of a supporting member (6c), so that the first shell component (2) spans an arc,
- fastening an edge of the suspension strut tower (1d) from below to the first shell component (2),
- connecting a second shell component (3) to an upper side of a supporting member (6b), an upper side of the first shell component (2) and an outer upper side of the suspension strut tower (1b), and
- fastening a third shell component (4) to an inner side of an engine bracket (5a) and an upper side of an engine bracket (5b) and also to an inner side of the first shell component (2) and an inner upper side of the suspension strut tower (1a).

8. A method according to Claim 7, **characterised in that** the suspension strut tower (1) and the shell components (2, 3, 4) are glued together.

9. A method according to Claim 7 or Claim 8, **characterised in that** the suspension strut tower (1) is joined to the first shell component (2), which is joined from below to the underside of the supporting member (6c) and the second shell component (3) is joined from above to the upper side of the supporting member (6b) and the suspension strut tower (1), so that a substantially rectangular profile (7) is formed between an outer side of the suspension strut tower (1c), an inner side of the supporting member (6a), the first shell component (2) which is joined from below to the supporting member (6) and the second shell component (3) which is connected to the upper side of the supporting member (6b).

10. A method according to one of Claims 7 to 9, **characterised in that** the third shell component (4) together with the first shell component (2) form a substantially vertical profile (8) which is closed at its lower end by the engine bracket (6) and at its upper end by the suspension strut tower (1).

## Revendications

1. Support élastique destiné à un véhicule,
**caractérisé par**
un pot de jambe de suspension (1) en un matériau métallique et trois composants de coque (2, 3, 4) en un matériau composite renforcé par des fibres, le pot de jambe de suspension (1) étant intégré aux composants de coque (2, 3, 4) de sorte :
- qu'un premier composant de coque (2) enserre un arc entre la face externe d'un support de moteur (5c) et la face inférieure (6c) d'un support d'appui, et que le pot de jambe de suspension (1) soit fixé par le bas avec son bord (1d) sur le premier composant de coque (2),
- qu'un second composant de coque (3) relie la face supérieure (6b) du support d'appui, la face supérieure du premier composant de coque (2) et la face supérieure externe du pot de jambe de suspension (1b),
- qu'un troisième composant de coque (4) soit fixé sur la face interne (5a) du support de moteur et la face supérieure (5b) du support de moteur, ainsi que sur la face interne du premier composant de coque (2) et la face supérieure interne du pot de jambe de suspension (1a).

2. Support élastique destiné à un véhicule conforme à la revendication 1,
**caractérisé en ce que**
le matériau composite renforcé par des fibres est un matériau composite renforcé par des fibres de carbone.

3. Support élastique destiné à un véhicule conforme à la revendication 1 ou 2,
**caractérisé en ce que**
le pot de jambe de suspension (1) et les composants de coque (2, 3, 4) sont reliés au moyen d'une colle.

4. Support élastique destiné à un véhicule conforme à l'une des revendications précédentes,
**caractérisé en ce que**
le pot de jambe de suspension (1), le premier composant de coque (2) et le second composant de coque (3) sont reliés entre eux de sorte que, entre la face externe du pot de jambe de suspension (1c), la face interne (6a) du support d'appui, le premier composant de coque (2) assemblé par le bas sur le support d'appui (6) et le second composant de coque (3) relié à la face supérieure (6b) du support d'appui, soit formé un profil (7) essentiellement rectangulaire.

5. Support élastique destiné à un véhicule conforme à l'une des revendications précédentes,
**caractérisé en ce que**
le premier composant de coque (2) et le troisième composant de coque (4) forment conjointement un profil essentiellement vertical (8) qui est fermé à son extrémité supérieure par le pot de jambe de suspension (1) et à son extrémité inférieure par le support de moteur (6).

6. Utilisation d'un Support élastique destiné à un véhicule conforme à l'une des revendications précédentes, pour la liaison une unité d'amortissement de suspension d'un essieu avant, de préférence d'un essieu avant de type Mc Pherson.

7. Procédé d'obtention d'un support élastique destiné à un véhicule,
**caractérisé en ce qu'**
il comporte des étapes consistant à :
- se procurer un pot de jambe de suspension (1) en un matériau métallique et trois composants de coque (2, 3, 4) en un matériau composite renforcé par des fibres,
- fixer un premier composant de coque (2) sur la face externe (5c) d'un support de moteur et sur la face inférieure (6c) d'un support d'appui de sorte que le premier composant de coque (2) enserre un arc,
- fixer un bord du pot de jambe de suspension (1d) par le bas sur le premier composant de coque (2),
- joindre un second composant de coque (3) à la face supérieure (6b) d'un support d'appui, à la face supérieure du premier composant de coque (2) et à la face supérieure externe du pot de jambe de suspension (1b), et
- fixer un troisième composant de coque (4) sur la face interne (5a) d'un support de moteur et sur la face supérieure (5b) d'un support de moteur ainsi que sur la face interne du premier composant de coque (2) et sur la face supérieure interne du pot de jambe de suspension (1a).

8. Procédé conforme à la revendication 7,
**caractérisé en ce que**
le pot de jambe de suspension (1) et les composants de coque (2, 3, 4) sont collés.

9. Procédé conforme à la revendication 7 ou 8,
**caractérisé en ce que**
le pot de jambe de suspension (1) est assemblé au premier composant de coque (2) qui est assemblé par le bas à la face inférieure (6c) du support d'appui et le second composant de coque (3) est assemblé par le haut à la face supérieure (6b) du support d'appui et au pot de jambe de suspension (1) de sorte que, soit formé entre la face externe (1c) du pot de jambe de suspension, la face interne (6a) du support d'appui, le premier composant de coque (2) assemblé par le bas au support d'appui (6) et le second composant de coque (3) lié à la face supérieure (6b) du support d'appui, un profil essentiellement rectangulaire (7).

10. Procédé conforme à l'une des revendications 7 à 9,
**caractérisé en ce que**
le troisième composant de coque (4) forme conjointement au premier élément de coque (2) un profil (8) essentiellement vertical qui est fermé à son extrémité inférieure par le support de moteur (6) et à son extrémité supérieure par le pot de jambe de suspension (1).
